(19) **Europäisches Patentamt / European Patent Office / Office européen des brevets**

(11) **EP 2 990 829 B1**

(12) **FASCICULE DE BREVET EUROPEEN**

(45) Date de publication et mention de la délivrance du brevet:
**13.09.2017 Bulletin 2017/37**

(51) Int Cl.:
**G01S 19/30** *(2010.01)*  **H04B 1/69** *(2011.01)*

(21) Numéro de dépôt: **15182655.9**

(22) Date de dépôt: **27.08.2015**

(54) **MÉTHODE D'ACQUISITION D'UNE SÉQUENCE DE GOLD PAR DOUBLE DÉCODAGE ITÉRATIF**
**ERFASSUNGSMETHODE EINES GOLD-CODES DURCH DOPPELTE ITERATIVE DEKODIERUNG**
**METHOD FOR ACQUIRING A GOLD SEQUENCE BY DOUBLE ITERATIVE DECODING**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.08.2014 FR 1458115**

(43) Date de publication de la demande:
**02.03.2016 Bulletin 2016/09**

(73) Titulaire: **Commissariat à l'Énergie Atomique et aux Énergies Alternatives**
**75015 Paris (FR)**

(72) Inventeur: **BOUVIER DES NOES, Mathieu**
**38000 GRENOBLE (FR)**

(74) Mandataire: **Brevalex**
**56, Boulevard de l'Embouchure**
**B.P. 27519**
**31075 Toulouse Cedex 2 (FR)**

(56) Documents cités:
**CN-B- 102 332 932    FR-A1- 3 002 388**
**US-A1- 2008 215 269**

• **FABIO PRINCIPE ET AL: "Rapid Acquisition of Gold Codes and Related Sequences Using Iterative Message Passing on Redundant Graphical Models", MILCOM 2006, 1 octobre 2006 (2006-10-01), pages 1-7, XP055189450, DOI: 10.1109/MILCOM.2006.302342**
• **WEI WANG ET AL: "FPGA implementation of rapid PN code acquisition using iterative message passing algorithms", IEEE AEROSPACE AND ELECTRONIC SYSTEMS MAGAZINE, IEEE SERVICE CENTER, PISCATAWAY, NJ, US, vol. 29, no. 6, 1 juin 2014 (2014-06-01), pages 13-23, XP011557872, ISSN: 0885-8985, DOI: 10.1109/MAES.2014.120228 [extrait le 2014-07-29]**
• **CHUGG K M ET AL: "A New Approach to Rapid PN Code Acquisition Using Iterative Message Passing Techniques", IEEE JOURNAL ON SELECTED AREAS IN COMMUNICATIONS, IEEE SERVICE CENTER, PISCATAWAY, US, vol. 23, no. 5, 1 mai 2005 (2005-05-01), pages 884-897, XP011131230, ISSN: 0733-8716, DOI: 10.1109/JSAC.2005.845424**

EP 2 990 829 B1

**Description**

**DOMAINE TECHNIQUE**

La présente invention concerne de manière générale le domaine du décodage. Elle s'applique notamment à la phase d'acquisition d'un signal satellitaire par un récepteur GPS (*Global Positioning System*) ou par un récepteur du système Galileo.

**ÉTAT DE LA TECHNIQUE ANTÉRIEURE**

Un récepteur GPS détermine classiquement sa position en mesurant les temps de vol de signaux reçus d'une pluralité de satellites (en principe au moins quatre). Pour estimer le temps de vol d'un signal GPS émis par un satellite, le récepteur utilise un canal d'acquisition grossière dit canal C/A (*Coarse Acquisition*) sur lequel le satellite émet un message de navigation étalé spectralement au moyen d'une séquence pseudo-aléatoire (dite séquence d'étalement) possédant de bonnes propriétés d'auto-corrélation ainsi que d'inter-corrélation (avec les séquences PRN utilisées par les autres satellites).

Les bonnes propriétés d'auto-corrélation des séquences d'étalement permettent d'optimiser la probabilité de détection d'un signal en présence de bruit alors que les bonnes propriétés d'inter-corrélation de ces séquences permettent aux différents satellites de partager une même bande de transmission au moyen d'un accès multiple par répartition de codes (CDMA).

La première tâche d'un récepteur GPS est de détecter les satellites en visibilité. Pour ce faire, le récepteur cherche à détecter le code d'étalement du satellite dont il souhaite tester la présence et, le cas échéant, se synchronise par rapport à ce signal. Cette première tâche est dénommée étape d'acquisition du signal GPS.

De nombreuses méthodes d'acquisition du signal GPS sont connues de l'état de la technique. Elles s'apparentent à la problématique de détection multi-utilisateur dans les systèmes CDMA. Ces méthodes d'acquisition sont généralement basées sur une corrélation du signal reçu par le récepteur avec le code d'étalement du satellite à tester. Un exemple de méthode d'acquisition par corrélation avec le code d'étalement est décrit dans l'article de A. Polydoros et al. intitulé « A unified approach to serial search spread spectrum code acquisition » Part I : A general theory & Part II : a matched filter receiver, publiés dans IEEE Trans. on. Comm., Vol. 32, No. 5,1984.

Une méthode d'acquisition plus récente a été proposée dans l'article de F. Principe et al. intitulé « Rapid acquisition of Gold codes and related sequences using iterative message passing on redundant graphical models » publié dans Proc. MILCOM'06, 2006. Cette méthode est basée sur un décodage itératif par passage de messages (IMPA) dans un graphe de Tanner représentant les contraintes de parité imposées au code.

Toutefois, cette dernière méthode d'acquisition ne permet pas d'obtenir des niveaux de probabilité de détection ratée (*missed detection probability*) et de probabilité de fausse alarme suffisamment faible à bas rapport signal sur bruit (SNR). Par probabilité de détection ratée, on entend la probabilité de ne pas se synchroniser avec une séquence d'étalement d'un satellite alors que celle-ci est effectivement reçue par le récepteur. Par probabilité de fausse alarme, on entend la probabilité de se synchroniser avec une séquence d'étalement alors que celle-ci n'est pas reçue par le récepteur.

La demande de brevet FR 1351423 propose une méthode d'acquisition par décodage IMPA permettant d'obtenir des niveaux de probabilité de détection ratée et de probabilité de fausse alarme sensiblement plus faibles. Toutefois, cette méthode est relativement complexe dans la mesure où elle effectue un décodage en série . Selon cette méthode, en effet, le décodeur suppose être synchronisé avec le code et tente un premier décodage. En cas d'échec le décodeur suppose être synchronisé avec l'instant suivant et ainsi de suite. Chaque tentative de décodage doit être réalisée dans un laps de temps très court de manière à respecter les contraintes de temps d'acquisition.

Le but de la présente invention est de proposer une méthode d'acquisition d'une séquence de Gold, en particulier d'une séquence de Gold émise par un satellite d'un système GPS ou Galiléo, qui permette d'obtenir des temps d'acquisition plus courts et avec une plus faible complexité que dans l'art antérieur.

**EXPOSÉ DE L'INVENTION**

La présente invention est définie par une méthode d'acquisition d'une séquence de Gold étalant un signal à une fréquence bribe, ladite séquence de Gold étant obtenue comme somme d'une première M-séquence et d'une seconde M-séquence , la première M-séquence étant générée par un premier polynôme générateur et la seconde M-séquence étant générée par un second polynôme générateur, les premier et second polynômes générateurs étant de même degré et le poids du second polynôme générateur étant supérieur au poids du premier polynôme générateur, la méthode comprenant :

(a) une étape de réception et d'échantillonage à la fréquence bribe dudit signal pour obtenir une pluralité d'échantillons représentatifs d'éléments successifs de ladite séquence de Gold ;

(b) une première étape de décodage par passage de messages dans un premier graphe bipartite entre des premiers noeuds de variable représentant les éléments successifs de la séquence de Gold et des premiers noeuds de contrôle , chaque noeud de contrôle étant associé de manière biunivoque à une variable représentative d'un élément de la seconde M-séquence, les arêtes du graphe bipartie étant déterminées par les coefficients du premier polynôme générateur ;

(c) une étape de décimation des variables représentatives d'éléments successifs de la seconde M-séquence à l'aide d'un facteur de décimation prédéterminé pour obtenir des secondes variables représentatives d'éléments d'une troisième M-séquence, la troisième séquence étant de même longueur que la seconde séquence et étant générée par un troisième polynôme générateur de poids minimal ;

(d) une seconde étape de décodage par passage de messages dans un second graphe bipartite entre lesdits seconds noeuds de variable et des seconds noeuds de contrôle, les arêtes du second graphe bipartite étant déterminées par les coefficients du troisième polynôme générateur.

On pourra effectuer une pluralité de premières étapes de décodage par passage de messages avant d'effectuer ladite étape de décimation.

Avantageusement, après la seconde étape de décodage par passage de messages, on effectue une opération inverse de celle de l'étape de décimation pour mettre à jour lesdites variables représentatives des éléments successifs de la seconde séquence.

On pourra également effectuer une pluralité de secondes étapes de décodage par passage de messages avant d'effectuer une opération inverse de celle de l'étape de décimation.

Les étapes (b) (c) (d) pourront être itérées jusqu'à ce qu'un critère d'arrêt prédéterminé soit satisfait. Lorsque ce critère d'arrêt est satisfait, on détermine à partir des valeurs des premières variables représentatives des éléments de la séquence de Gold et des variables représentatives des élements successifs de la seconde séquence l'instant de génération de ladite séquence de Gold.

## BRÈVE DESCRIPTION DES DESSINS

D'autres caractéristiques et avantages de l'invention apparaîtront à la lecture de modes de réalisation préférentiels de l'invention faite en référence aux figures jointes parmi lesquelles :

La Fig. 1 représente de manière schématique un générateur de séquence maximale selon une représentation de Fibonacci ;
La Fig. 2 donne des paramètres de codes de Gold pour différents satellites ;
La Fig. 3 représente de manière schématique un générateur de code de Gold dans un système GPS ;
La Fig. 4 représente schématiquement une méthode d'acquisition d'une séquence de Gold à l'aide de deux décodeurs cascadés à passage de messages ;
La Fig. 5 représente schématiquement une méthode d'acquisition d'une séquence de Gold selon un mode de réalisation de l'invention ;
La Fig. 6 illustre la probabilité d'une acquisition d'une séquence de Gold en fonction du rapport signal sur bruit, pour la méthode d'acquisition de la Fig. 5 et celle de la Fig. 4.

## EXPOSÉ DÉTAILLÉ DE MODES DE RÉALISATION PARTICULIERS

On rappelle qu'un signal émis par un satellite d'un système de positionnement tel que le système GPS ou le système Galileo est obtenu par étalement spectral d'un message de navigation, le code d'étalement étant propre au satellite en question. Chaque symbole du message dure une pluralité de périodes de répétition du code d'étalement. Ainsi, pour le système GPS, chaque symbole dure 20 ms, soit 20 périodes de répétition du code d'étalement, la fréquence bribe (ou rythme chip) étant de 1,023 MHz.

Les séquences d'étalement $c_i$ des différents satellites $i = 1,...,I$ sont des séquences de Gold, chaque séquence de Gold étant construite à partir d'une somme de deux séquences de longueur maximale, encore dénommées M-séquences. On rappelle qu'une M-séquence est une suite périodique de valeurs produite par un registre à décalage à rétroaction linéaire (LFSR) qui explore toutes les valeurs pouvant être produites par le registre à décalage. Toute combinaison linéaire de deux M-séquences de même degré $r$ (c'est-à-dire générées par des polynômes générateurs de même degré) ne donne pas nécessairement une séquence de Gold : une paire de M-séquences dont la somme donne une séquence de Gold est appelée paire de séquences préférentielles.

Les séquences d'étalement $c_i$ sont chacune construites à partir d'une paire de M-séquences préférentielles, x et y . Plus précisément :

$$c_i(k) = x(k) + y(k - \tau_i) \tag{1}$$

où $\tau_i$, est un retard, exprimé en nombre de périodes bribes, spécifique au satellite $i$ .

Dans le cas du système GPS, les M-séquences $x$ et $y$ sont respectivement générées à partir des polynômes générateurs :

$$g_x(D) = D^{10} + D^3 + 1$$

$$g_y(D) = D^{10} + D^9 + D^8 + D^6 + D^3 + D^2 + 1 \tag{2}$$

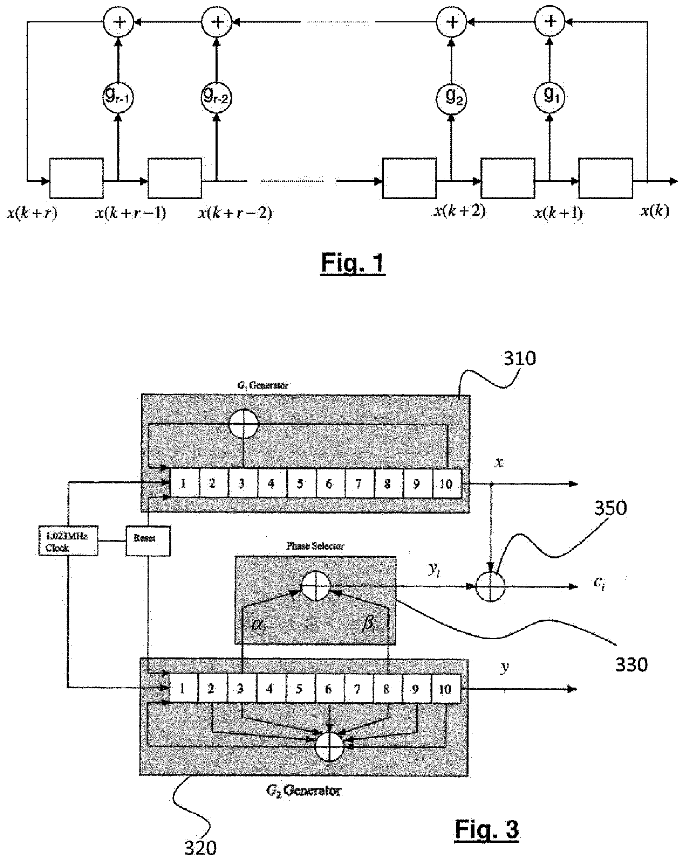

On rappelle qu'une séquence LFSR générée par un polynôme générateur $g(D) = \sum_{p=0}^{r} g_p D^p$ de degré $r$, avec $g_r = g_0 = 1$ est obtenue par un registre à décalage à $r$ positions mémoire (dénommées ci-après plus simplement positions) et $r$ prises, rebouclé sur lui-même, comme représenté en Fig. 1, selon la représentation dite de Fibonacci. Les coefficients multiplicateurs sur les différentes prises sont les coefficients du polynôme générateur.

Une M-séquence est définie de manière univoque par son polynôme générateur, le contenu du registre à décalage à l'instant initial donnant sa valeur à l'origine. Une M-séquence générée par un polynôme générateur (primitif) de degré r est périodique et de *longueur K = 2<sup>r</sup>* -1. Les M-séquences $x$ et $y$ sont générées en initialisant les positions de leurs registres à décalage respectifs à 1, soit $x(0) = x(1) = ... = x(9) = 1$ et $y(0) = y(1) = ... = y(9) = 1$.

On peut montrer que la séquence de Gold $c_i$ est également une M-séquence de longueur $2^{2r}$ -1 et de polynôme générateur $g_c(D) = g_x(D)g_y(D)$ .

La séquence retardée définie par $y_i(k) = y(k - \tau_i)$ est avantageusement obtenue en utilisant la propriété « *add and shift* » des M-séquences. Plus précisément, les délais $\tau_i$ sont choisis de sorte à ce que la séquence $y_i$ puisse être générée à partir de la somme des contenus en deux positions $\alpha_i$ et $\beta_i$ du registre à décalage générant la séquence $y$ soit :

$$y_i(k) = a_{\alpha_i}(k) + a_{\beta_i}(k) \tag{3}$$

où $a_{\alpha_i}(k)$, $a_{\beta_i}(k)$ sont respectivement les contenus du registre à décalage aux positions $\alpha_i$ et $\beta_i$, à l'instant $k$, autrement dit $a_{\alpha_i}(k) = y(k + \alpha_i)$ et $a_{\beta_i}(k) = y(k + \beta_i)$ .

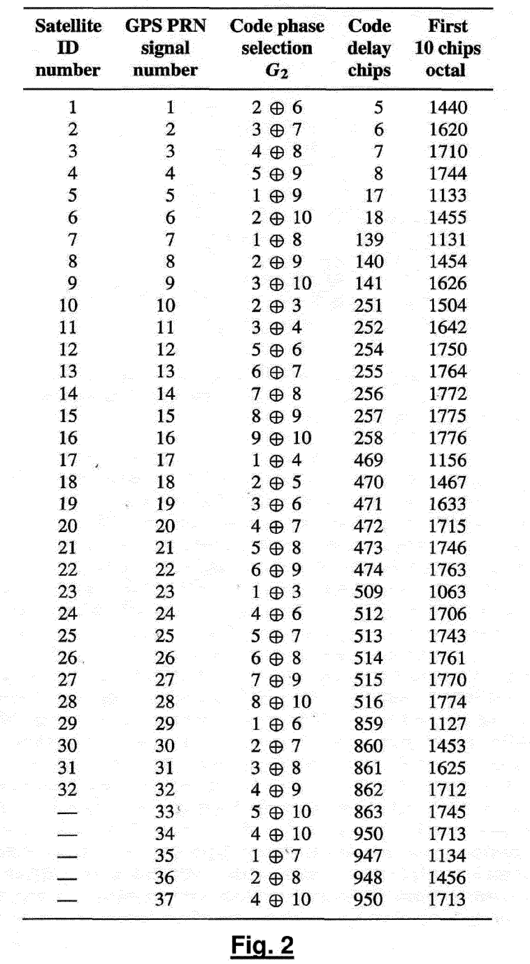

On a représenté en Fig. 2 une table donnant les paramètres $\alpha_i$, $\beta_i$ et $\tau_i$ pour les différents satellites. Plus précisément, la colonne intitulée « code phase selection » donne les positions $\alpha_i$, $\beta_i$ et la colonne intitulée « code delay chips » donne le retard $\tau_i$. Enfin, la dernière colonne fournit le mot d'initialisation, c'est-à-dire les 10 premières valeurs de la séquence $y_i$ en représentation octale.

La Fig. 3 représente de manière schématique un générateur de code d'étalement (code C/A) dans un système GPS.

On distingue dans la partie supérieure le générateur, 310, de la M-séquence $X$ et dans la partie inférieure le générateur, 320, de la M-séquence $y$. Les deux générateurs 310 et 320 utilisent des registres à décalage rebouclés sur eux-mêmes. Pour chaque générateur, les prises du registre à décalage correspondent aux monômes du polynôme générateur correspondant. Le sélecteur de phase, 330, vient sommer sélectivement certaines positions du registre à décalage de 320. Le choix de ces positions $\alpha_i$ et $\beta_i$ est effectué selon la table de la Fig. 2, la somme des contenus du registre en ces deux positions fournissant la séquence retardée $y_i$. Cette implémentation est avantageuse dans la mesure où elle ne nécessite pas l'utilisation d'une importante ligne à retard, de longueur $\tau_i$.

La somme des *M-séquences x* et $y_i$ en 350 donne la séquence de Gold $C_i$, autrement dit la séquence d'étalement relative au satellite $i$.

On considérera dans la suite la synchronisation d'un récepteur par rapport à un signal d'un satellite $i$, autrement dit l'acquisition du signal satellitaire émis par le satellite $i$.

Le récepteur échantillonne à la fréquence bribe le signal satellitaire reçu, après translation en bande de base.

Le récepteur forme une séquence de $N$ échantillons successifs du signal ainsi reçu, où $N > 2r$ . Ces $N$ échantillons successifs sont constitués de valeurs souples, par exemple des rapports des logarithmes de valeurs de vraisemblance ou LLRs (*Log Likelihood Ratios*), et sont notés dans la suite $r(0),...,r(N-1)$.

Les échantillons $r(k)$, $k = 0,...,N-1$, peuvent s'exprimer sous la forme :

$$r(k) = \tilde{x}(k)\,\tilde{y}(k - \tau_i) + w(k) \tag{4}$$

où $\tilde{x}(k) = 1 - 2x(k)$ et $\tilde{y}(k) = 1 - 2y(k)$ sont les versions BPSK des bits x(k) et $y(k)$.

Les séquences $x$ et $y_i$ vérifient respectivement les équations de parité :

$$\sum_{j=0}^{r} g_x(r-j)x(k+j) = 0 \tag{5-1}$$

$$\sum_{j=0}^{r} g_y(r-j)y_i(k+j) = 0 \tag{5-2}$$

les sommes portant ici sur des bits et donc étant calculées modulo 2.

De manière similaire, la séquence de Gold $c_i$ formée par des M-séquences $x$ et $y_i$, vérifie la relation de parité :

$$\sum_{k=0}^{2r} g_c(2r-k)c_i(k) = 0 \tag{6}$$

Compte tenu du fait que $c_i(k) = x(k) + y_i(k)$,

$$\sum_{j=0}^{r} g_x(r-j)c_i(k+j) = \sum_{j=0}^{r} g_x(r-j)y_i(k+j) \tag{7}$$

Compte tenu de la propriété précitée « *add-and-shift* » des M-séquences, il existe un entier $\theta_i$ tel que :

$$y_i(k+\theta_i) = \sum_{j=0}^{r} g_x(r-j)y_i(k+j) \tag{8}$$

Compte tenu de (7) et (8), on a l'équation de parité :

$$\left(\sum_{j=0}^{r} g_x(r-j)c_i(j+k)\right) + y_i(k+\theta_i) = 0 \tag{9}$$

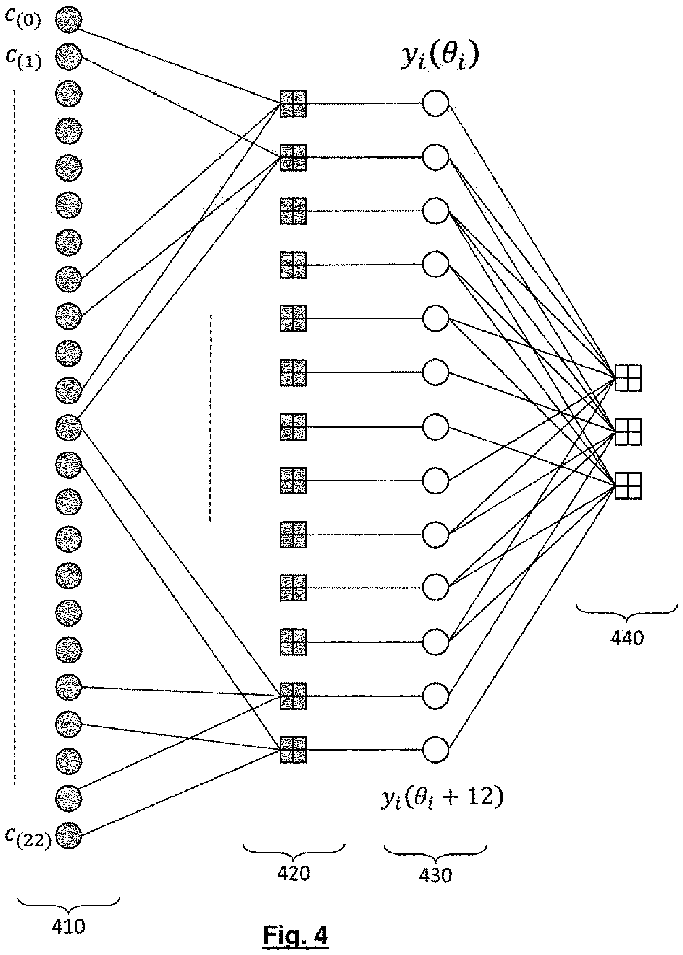

On comprend des expressions (5-2) et (9) que l'on peut décoder conjointement les séquences $c_i(k)$ et $y_i(k)$ à l'aide de deux décodeurs à passage de messages en cascade, comme représenté en Fig. 4.

Le premier décodeur est basé sur un premier graphe bipartite comprenant $N$ premiers noeuds de variable, 410, et $N-r$ premiers noeuds de contrôle, 420. Les premiers noeuds de variable sont initialisés avec les valeurs des échantillons $r(0),...,r(N-1)$ et les premiers noeuds de contrôle correspondent aux équations de parité (9). Les arêtes du premier graphe bipartite sont déterminées par les coefficients du polynôme générateur $g_x$ et, plus précisément par les éléments de la matrice de parité de taille $(N-r) \times N$ :

$$\mathbf{H}_x = \begin{pmatrix} g_x(r) & \cdots & g_x(0) & 0 & \cdots & \cdots & 0 \\ 0 & g_x(0) & \cdots & g_x(0) & 0 & \cdots & 0 \\ \vdots & \ddots & \ddots & \ddots & \ddots & \ddots & \vdots \\ 0 & \cdots & 0 & g_x(r) & \cdots & g_x(0) & 0 \\ 0 & \cdots & \cdots & 0 & g_x(r) & \cdots & g_x(0) \end{pmatrix} \tag{10}$$

chaque premier noeud de contrôle correspondant à une ligne de la matrice de parité $\mathbf{H}_x$.

A chacun des premiers noeuds de contrôle, 420, est associé de manière biunivoque un second noeud de variable. Plus précisément, à chaque premier noeud de contrôle $k = 0,...,N\text{-}r\text{-}1$ correspondant à l'équation de parité (9-2), est associé un second noeud de variable $y_i(k + \theta_i)$.

Le second décodeur est basé sur un second graphe bipartite comprenant $N\text{-}r$ seconds noeuds de variable, 430, et $N\text{-}2r$ seconds noeuds de contrôle, 440. Les seconds noeuds de variable sont initialisés à des valeurs nulles de LLR (absence d'information a *priori*) et les seconds noeuds de contrôle correspondent aux équations de parité (5-2). Les arêtes du second graphe bipartite sont déterminées par les coefficients du polynôme générateur $g_y$ et plus précisément par les éléments de la matrice de parité de taille $(N\text{-}2r)\times(N\text{-}r)$ :

$$\mathbf{H}_y = \begin{pmatrix} g_y(r) & \cdots & g_y(0) & 0 & \cdots & \cdots & 0 \\ 0 & g_y(0) & \cdots & g_y(0) & 0 & \cdots & 0 \\ \vdots & \ddots & \ddots & \ddots & \ddots & \ddots & \vdots \\ 0 & \cdots & 0 & g_y(r) & \cdots & g_y(0) & 0 \\ 0 & \cdots & \cdots & 0 & g_y(r) & \cdots & g_y(0) \end{pmatrix} \qquad (11)$$

chaque second noeud de contrôle correspondant à une ligne de la matrice de parité $\mathbf{H}_y$.

Le premier décodeur à passage de messages permet d'obtenir une première estimation des variables $c_i(k)$, $k=0,...,N\text{-}1$ et $y_i(k+\theta_i)$, $k=0,....\ N\text{-}r\text{-}1$. Le second décodeur à passage de messages permet ensuite d'affiner la première estimation des variables $y_i(k+\theta_i)$, $k=0,...,N\text{-}r\text{-}1$ à l'aide des contraintes imposées par les noeuds de contrôle 540. Cette seconde estimation affinée est ensuite utlisée dans le premier décodeur pour affiner la première estimation des variables $c_i(k)$, $k=0,...,N\text{-}1$ et $y_i(k+\theta_i)$, $k=0,...,N\text{-}r\text{-}1$. Le processus de décodage se poursuit ainsi jusqu'à ce qu'un critère d'arrêt soit satisfait, par exemple au bout d'un nombre prédéterminé d'itérations ou bien lorsque les valeurs absolues de LLR des variables $c_i(k)$, $k=0,....\ N\text{-}1$ *sont* supérieures à un seuil prédéterminé. D'autres critères d'arrêt pourront être envisagés par l'homme du métier sans sortir du cadre de la présente invention.

Le passage du premier au second décodeur peut être effectué toutes les $L_1 \geq 1$ itérations du premier décodeur. De manière similaire, le passage du second au premier décodeur peut être effectué toutes les $L_2 \geq 1$ itérations du second décodeur. On rappelle qu'une itération d'un décodeur à passage de messages comprend un premier transfert de messages des noeuds de variables aux noeuds de contrôle via le graphe bipartite et un second transfert de messages en sens inverse.

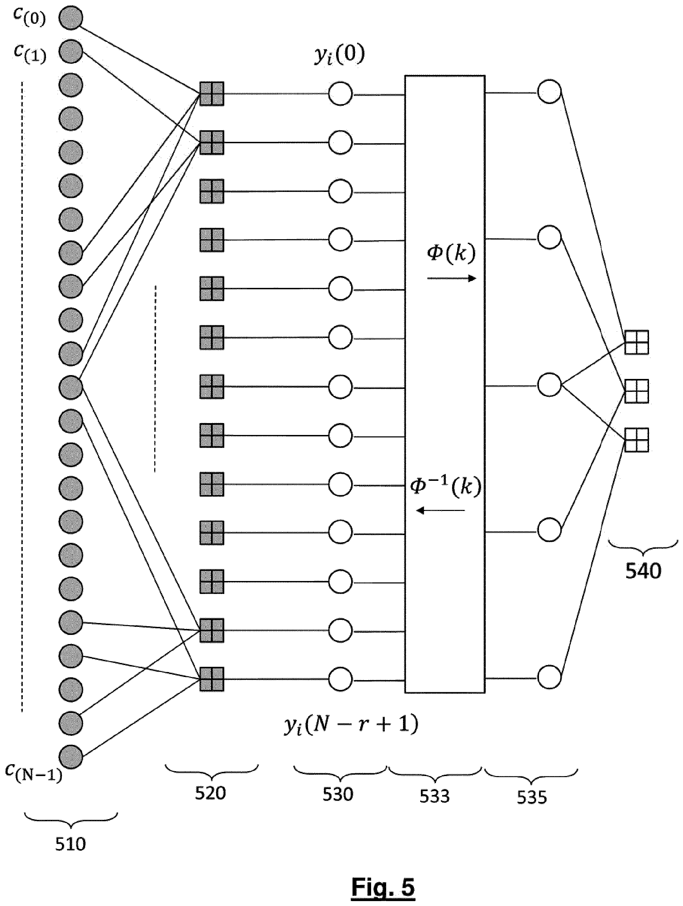

La Fig. 5 représente schématiquement une méthode d'acquisition d'une séquence de Gold selon un mode de réalisation de l'invention.

On suppose comme précédemment que la séquence de Gold $c_i$ à acquérir est la somme d'un première M-séquence $x$ de polynôme générateur $g_x$ et d'une seconde M-séquence $y_i$ de polynôme générateur $g_y$. On supposera que les deux polynômes générateurs $g_x$ et $g_y$ sont de même degré et que le poids du polynôme $g_y$ est supérieur au poids du polynôme $g_x$. On rappelle que le poids d'un polynôme est la somme des coefficients des monômes figurant dans ce polynôme. Ainsi les poids respectifs des polynômes $g_x$ et $g_y$ définis en (2) sont respectivement de 3 et 7.

On sait que deux M-séquences de même taille, c'est-à-dire dont les polynômes générateurs ont le même degré, sont reliées par une relation de décimation. Autrement dit, pour deux M-séquences $z_1$ et $z_2$ de polynômes générateurs respectifs $g_{z1}$ et $g_{z2}$, de même degré $r$, il existe un facteur de décimation $\eta_{21}$ et un offset $\mu_{21} < K$ tels que que :

$$z_2(k) = z_1(\eta_{21}k + \mu_{21}) \qquad (12)$$

où, bien entendu, les valeurs *de k* et $\eta_{21}k$ sont prises modulo $K = 2^r\text{-}1$.

Pour la même raison, il existe un facteur de décimation $\eta_{12}$ et un offset $\mu_{12} < K$ tels que :

$$z_1(k) = z_2(\eta_{12}k + \mu_{12}) \qquad (13)$$

les facteurs de décimation $\eta_{21}$ et $\eta_{12}$ vérifiant :

$$\eta_{21}\eta_{12} = 1 \text{ modulo } K \qquad (14)$$

et les offsets $\mu_{21}$ et $\mu_{12}$ vérifiant par ailleurs :

$$\eta_{12}\mu_{21} + \mu_{12} = 0 \text{ modulo } K \qquad\qquad (15\text{-}1)$$

et

$$\eta_{21}\mu_{12} + \mu_{21} = 0 \text{ modulo } K \qquad\qquad (15\text{-}2)$$

Si l'on considère la M-séquence $y_i$ de polynôme générateur $g_y$, il existe un polynôme $g_u$ de même degré $r$, et de plus faible poids, générant une M-séquence $u$ telle que :

$$u(k) = y_i\big(\Phi_i(k)\big) \qquad\qquad (16)$$

avec $\Phi_i(k) = \eta k + \mu_i$ où $\eta$ est un facteur de décimation et $\mu_i$ est un offset dépendant de $\theta_i$.

Le fait de recourir à un polynôme générateur $g_u$ de poids minimal en lieu et place du polynôme générateur $g_y$ conduit à un graphe bipartite du second décodeur ne présentant pas ou peu de cycles courts, ce qui accélère la convergence du décodage et réduit le taux d'erreurs.

Plus précisément, la Fig. 5 montre un premier décodeur à passage de messages dont les noeuds de variables, 510, correspondent aux bits successifs de la séquence de Gold à acquérir et dont les noeuds de contrôle, 520, sont initialisés par les valeurs LLR des échantillons du signal reçu, après translation en bande de base. Comme précédemment, chaque premier noeud de contrôle est associé à une contrainte donnée par une ligne de de la matrice $\mathbf{H}_x$ et à un noeud de variable $y_i(k + \theta_i)$, $k = 0,...,N\text{-}r\text{-}1$.

A la différence de la Fig. 4 cependant, on effectue ensuite une décimation des variables $y_i(k + 0_i)$, $k = 0,...,N\text{-}r\text{-}1$ pour obtenir une M-séquence $u$ correspondant au polynôme générateur de poids minimal $g_u$. Le second décodage à passage de messages est effectué à partir de la séquence décimée par le facteur de décimation $\eta$. Plus précisément, le second décodage est obtenu par passage de messages sur un second graphe bipartite comprenant des seconds noeuds de variable 535 et des seconds noeuds de contrôle 540, les secondes variables étant obtenues par décimation des variables $y_i(k+\theta_i)$, $k=0,...,N\text{-}r\text{-}1$.

Les arêtes du second graphe bipartite du second décodeur à passage de messages sont déterminées par les coefficient du polynôme générateur de poids minimal $g_u$ et plus précisément par les éléments de la matrice de parité de taille $(N\text{-}2r)\times(N\text{-}r)$ :

$$\mathbf{H}_u = \begin{pmatrix} g_u(r) & \cdots & g_u(0) & 0 & \cdots & \cdots & 0 \\ 0 & g_u(0) & \cdots & g_u(0) & 0 & \cdots & 0 \\ \vdots & \ddots & \ddots & \ddots & \ddots & \ddots & \vdots \\ 0 & \cdots & 0 & g_u(r) & \cdots & g_u(0) & 0 \\ 0 & \cdots & \cdots & 0 & g_u(r) & \cdots & g_u(0) \end{pmatrix} \qquad (17)$$

Cette matrice de parité présente l'avantage d'être plus éparse (*sparse matrix*) que la matrice de parité $\mathbf{H}_y$ et, par conséquent, les cycles du second graphe bipartite du second décodeur sont plus longs.

On notera que le second décodeur est séparé du premier décodeur par un module de décimation 533. Ce module effectue une décimation $\Phi_i(k) = \eta k + \mu_i$ lorsque l'on passe de la séquence $y_i$ à la séquence $u$, autrement dit lorsque l'on passe d'une itération du premier décodeur à une itération du second décodeur. Réciproquement, ce module effectue une opération en sens inverse, à savoir une décimation $\Phi_i^{-1}(k) = \eta' k + \mu'_i$ lorsque l'on passe de la séquence $u$ à la séquence $y_i$, autrement dit lorsque l'on passe d'une itération de second décodeur à une itération du premier décodeur. Afin de permettre une cette opération de décimation pour passer de la séquence $u$ à la séquence $y_i$ et réciproquement, il faut que le nombre d'échantillons de ces séquences soit supérieur ou égal à $K = 2^r\text{-}1$, autrement le nombre $N$ d'échantillons du signal reçu doit alors être tel que $N \geq 2^r + r\text{-}1$. De préférence, on pourra choisir $N = 2^r + r\text{-}1$.

Dans le cas d'une réception satellitaire, le décodage peut être répété pour chaque satellite $i$. Lorsque le décodage converge, on obtient les séquences $c_i(k)$ et $y_i(k+\theta_i)$. On peut alors en déduire où l'on se trouve dans les M-séquences $y_i(k + \theta_i)$ et x(k), autrement dit l'instant de génération de la séquence de Gold, et se synchroniser par rapport à elle.

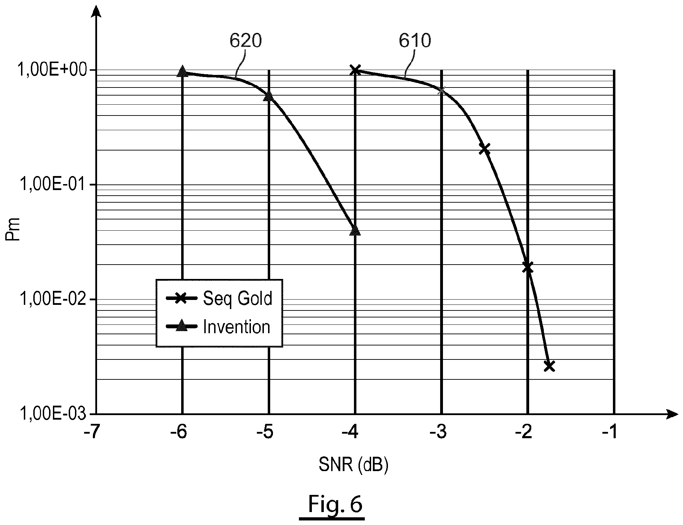

La Fig. 6 illustre la probabilité d'acquisition d'une séquence de Gold en fonction du rapport signal sur bruit, selon la méthode de décodage de la Fig. 5 et celle de la Fig. 4.

On a représenté en 610 la probabilité d'acquisition de la séquence de Gold obtenue à l'aide de la méthode illustrée en Fig. 4 et en 620 celle obtenue à l'aide de la méthode selon un mode de réalisation de l'invention, illustrée en Fig. 5.

Les polynômes générateurs utilisés étaient les suivants :

$$g_x(D) = D^{10} + D^3 + 1$$

$$g_y(D) = D^{10} + D^9 + D^8 + D^6 + D^3 + D^2 + 1$$

$$g_c(D) = D^{20} + D^{19} + D^{18} + D^{16} + D^{11} + D^8 + D^5 + D^2 + 1$$

$$g_u(D) = g_x(D)$$

et la fonction de décimation était $\Phi(k) = 65k + 27300$ .

On remarque que la méthode d'acquisition de la Fig. 5 fait gagner environ 2dB en rapport signal sur bruit pour une même probabilité d'acquisition.

## Revendications

1. Méthode d'acquisition d'une séquence de Gold ($c_i$) étalant un signal à une fréquence bribe, ladite séquence de Gold étant obtenue comme somme d'une première M-séquence ($x$) et d'une seconde M-séquence ($y_i$), la première M-séquence étant générée par un premier polynôme générateur ($g_x$) et la seconde M-séquence étant générée par un second polynôme générateur ($g_y$), les premier et second polynômes générateurs étant de même degré et le poids du second polynôme générateur étant supérieur au poids du premier polynôme générateur, la méthode comprenant :

   (a) une étape de réception et d'échantillonage à la fréquence bribe dudit signal pour obtenir une pluralité d'échantillons représentatifs d'éléments successifs de ladite séquence de Gold ;
   (b) une première étape de décodage par passage de messages dans un premier graphe bipartite entre des premiers noeuds de variable (510) représentant les éléments successifs de la séquence de Gold et des premiers noeuds de contrôle (520), chaque noeud de contrôle étant associé de manière biunivoque à une variable (530) représentative d'un élément de la seconde M-séquence, les arêtes du graphe bipartie étant déterminées par les coefficients du premier polynôme générateur ;

   ladite méthode étant **caractérisée en ce qu'**elle comprend en outre :

   (c) une étape de décimation (533) des variables représentatives d'éléments successifs de la seconde M-séquence à l'aide d'un facteur de décimation prédéterminé pour obtenir des secondes variables représentatives d'éléments d'une troisième M-séquence, la troisième séquence ($u$) étant de même longueur que la seconde séquence et étant générée par un troisième polynôme générateur de poids minimal ($g_u$);
   (d) une seconde étape de décodage par passage de messages dans un second graphe bipartite entre lesdits seconds noeuds de variable (535) et des seconds noeuds de contrôle (540), les arêtes du second graphe bipartite étant déterminées par les coefficients du troisième polynôme générateur.

2. Méthode d'acquisition d'une séquence de Gold selon la revendication 1, **caractérisée en ce que** l'on effectue une pluralité ($L_1$) de premières étapes de décodage par passage de messages avant d'effectuer ladite étape de décimation (533).

3. Méthode d'acquisition d'une séquence de Gold selon la revendication 1 ou 2, **caractérisée en ce qu'**après la seconde étape de décodage par passage de messages, on effectue une opération inverse de celle de l'étape de décimation (533) pour mettre à jour lesdites variables (530) représentatives des éléments successifs de la seconde séquence.

4. Méthode d'acquisition d'une séquence de Gold selon la revendication 3, **caractérisée en ce que** l'on effectue une pluralité ($L_2$) de secondes étapes de décodage par passage de messages avant d'effectuer une opération inverse de celle de l'étape de décimation.

5. Méthode d'acquisition d'une séquence de Gold selon la revendication 1 **caractérisée en ce que** les étapes (b) (c) (d) sont itérées jusqu'à ce qu'un critère d'arrêt prédéterminé soit satisfait.

6. Méthode d'acquisition d'une séquence de Gold selon la revendication 5, **caractérisé en ce que**, lorsque le critère d'arrêt est satisfait on détermine à partir des valeurs des premières variables représentatives des éléments de la séquence de Gold et des variables représentatives des élements successifs de la seconde séquence l'instant de génération de ladite séquence de Gold.

## Patentansprüche

1. Verfahren zur Erfassung einer Gold-Sequenz ($c_i$), die ein Signal bei einer Chipfrequenz spreizt, wobei die Gold-Sequenz erhalten wird als Summe einer ersten M-Sequenz (x) und einer zweiten M- Sequenz ($y_i$), wobei die erste M-Sequenz durch ein ersten Erzeugendenpolynom ($g_x$) erzeugt wird, und die zweite M-Sequenz durch ein zweites Erzeugendenpolynom ($g_y$) erzeugt wird, wobei das erste und das zweite Erzeugendenpolynom vom gleichen Grad sind, und wobei das Gewicht des zweiten Erzeugendenpolynoms größer als das Gewicht des ersten Erzeugendenpolynoms ist, wobei das Verfahren umfasst:

   (a) einen Schritt des Empfangens und des Abtastens des Signals bei der Chipfrequenz, um eine Mehrzahl von Abtastwerten zu erhalten, die repräsentativ sind für aufeinanderfolgende Elemente der Gold-Sequenz;
   (b) einen ersten Schritt der Dekodierung durch Durchleitung von Nachrichten in einem ersten bipartiten Graph zwischen ersten Variablenknoten (510), die die aufeinanderfolgenden Elemente der Gold-Sequenz repräsentieren, und ersten Steuerknoten (520), wobei jeder Steuerknoten in eineindeutiger Weise einer Variablen (530) zugeordnet ist, die für ein Element der zweiten M-Sequenz repräsentativ ist, wobei die Kanten des bipartiten Graphen durch die Koeffizienten des ersten Erzeugendenpolynoms bestimmt sind;

   wobei das Verfahren **dadurch gekennzeichnet ist, dass** es ferner umfasst:

   (c) einen Schritt der Dezimierung (533) der Variablen, die für aufeinanderfolgende Elemente der zweite M-Sequenz repräsentativ sind, mit Hilfe eines vorbestimmten Dezimierungsfaktors, um zweite Variable zu erhalten, die repräsentativ sind für Elemente einer dritten M-Sequenz, wobei die dritte Sequenz (u) die gleiche Länge wie die zweite Sequenz hat und durch ein drittes Erzeugendenpolynom mit minimalem Gewicht ($g_u$) erzeugt ist;
   (d) einen zweiten Schritt der Dekodierung durch Durchleitung von Nachrichten in einem bipartiten Graph zwischen den zweiten Variablenknoten (535) und zweiten Steuerknoten (540), wobei die Kanten des zweiten bipartiten Graphen durch die Koeffizienten des dritten Erzeugendenpolynoms bestimmt sind.

2. Verfahren zur Erfassung einer Gold-Sequenz nach Anspruch 1, **dadurch gekennzeichnet, dass** man eine Mehrzahl ($L_1$) von ersten Schritten der Dekodierung durch Durchleitung von Nachrichten durchführt, bevor der Dezimierungsschritt (533) durchgeführt wird.

3. Verfahren zur Erfassung einer Gold-Sequenz nach Anspruch 1 oder 2, **dadurch gekennzeichnet, dass** man nach dem zweiten Schritt der Dekodierung durch Durchleitung von Nachrichten eine Operation durchführt, die invers zu jener des Dezimierungsschritts (533) ist, um die Variablen (530) zu aktualisieren, die für die aufeinanderfolgenden Elemente der zweiten Sequenz repräsentativ sind.

4. Verfahren zur Erfassung einer Gold-Sequenz nach Anspruch 3, **dadurch gekennzeichnet, dass** man eine Mehrzahl ($L_2$) von zweiten Schritten der Dekodierung durch Durchleitung von Nachrichten durchführt, bevor eine Operation durchgeführt wird, die invers zu jener des Dezimierungsschritts ist.

5. Verfahren zur Erfassung einer Gold-Sequenz nach Anspruch 1, **dadurch gekennzeichnet, dass** die Schritte (b), (c), (d) iteriert werden, bis ein vorbestimmtes Abbruchkriterium erfüllt ist.

6. Verfahren zur Erfassung einer Gold-Sequenz nach Anspruch 5, **dadurch gekennzeichnet, dass** man, wenn das Abbruchkriterium erfüllt ist, ausgehend von den Werten der ersten Variablen, die repräsentativ sind für die Elemente der Gold-Sequenz, und den Variablen, die repräsentativ sind für die aufeinanderfolgenden Elemente der zweiten Sequenz, den Zeitpunkt der Erzeugung der Gold-Sequenz bestimmt.

**Claims**

1. A method for acquiring a Gold sequence ($c_i$) spreading a signal at a chip rate, said Gold sequence being obtained as a sum of a first M-sequence (x) and a second M-sequence ($y_i$), the first M-sequence being generated by a first generator polynomial ($g_x$) and the second M-sequence being generated by a second generator polynomial ($g_y$), the first and second generator polynomials being of the same degree and the weight of the second generator polynomial being higher than the weight of the first generator polynomial, the method comprising:

    (a) a step of receiving and sampling at the chip rate said signal to obtain a plurality of samples representative of successive elements of said Gold sequence;
    (b) a first step of message passing decoding in a first bipartite graph between first variable nodes (510) representing the successive elements of the Gold sequence and first control nodes (520), each control node being bi-univocally associated with a variable (530) representative of an element of the second M-sequence, the edges of the bipartite graph being determined by the coefficients of the first generator polynomial;
    (c) a step of decimating (533) the variables representative of successive elements of the second M-sequence using a predetermined decimation factor to obtain second variables representative of elements of a third M-sequence, the third sequence (u) being of the same length as the second sequence and being generated by a third generator polynomial having a minimum weight ($g_u$);
    (d) a second step of message passing decoding in a second bipartite graph between said second variable nodes (535) and second control nodes (540), the edges of the second bipartite graph being determined by the coefficients of the third generator polynomial.

2. The method for acquiring a Gold sequence according to claim 1, **characterised in that** a plurality ($L_1$) of first message passing decoding steps are carried out before carrying out said decimation step (533).

3. The method for acquiring a Gold sequence according to claim 1 or 2, **characterised in that** after the second step of message passing decoding, a reverse operation to that of the decimation step (533) is carried out to update said variables (530) representative of the successive elements of the second sequence.

4. The method for acquiring a Gold sequence according to claim 3, **characterised in that** a plurality ($L_2$) of second message passing decoding steps are carried out before carrying out a reverse operation to that of the decimation step.

5. The method for acquiring a Gold sequence according to claim 1, **characterised in that** steps (b), (c), (d) are iterated until a predetermined stopping criterion is fulfilled.

6. The method for acquiring a Gold sequence according to claim 5, **characterised in that**, when the stopping criterion is fulfilled, the generation moment of said Gold sequence is determined based on the values of the first variables representative of the elements of the Gold sequence and the variables representative of the successive elements of the second sequence.

**Fig. 1**

**Fig. 3**

| Satellite ID number | GPS PRN signal number | Code phase selection $G_2$ | Code delay chips | First 10 chips octal |
|---|---|---|---|---|
| 1 | 1 | 2 ⊕ 6 | 5 | 1440 |
| 2 | 2 | 3 ⊕ 7 | 6 | 1620 |
| 3 | 3 | 4 ⊕ 8 | 7 | 1710 |
| 4 | 4 | 5 ⊕ 9 | 8 | 1744 |
| 5 | 5 | 1 ⊕ 9 | 17 | 1133 |
| 6 | 6 | 2 ⊕ 10 | 18 | 1455 |
| 7 | 7 | 1 ⊕ 8 | 139 | 1131 |
| 8 | 8 | 2 ⊕ 9 | 140 | 1454 |
| 9 | 9 | 3 ⊕ 10 | 141 | 1626 |
| 10 | 10 | 2 ⊕ 3 | 251 | 1504 |
| 11 | 11 | 3 ⊕ 4 | 252 | 1642 |
| 12 | 12 | 5 ⊕ 6 | 254 | 1750 |
| 13 | 13 | 6 ⊕ 7 | 255 | 1764 |
| 14 | 14 | 7 ⊕ 8 | 256 | 1772 |
| 15 | 15 | 8 ⊕ 9 | 257 | 1775 |
| 16 | 16 | 9 ⊕ 10 | 258 | 1776 |
| 17 | 17 | 1 ⊕ 4 | 469 | 1156 |
| 18 | 18 | 2 ⊕ 5 | 470 | 1467 |
| 19 | 19 | 3 ⊕ 6 | 471 | 1633 |
| 20 | 20 | 4 ⊕ 7 | 472 | 1715 |
| 21 | 21 | 5 ⊕ 8 | 473 | 1746 |
| 22 | 22 | 6 ⊕ 9 | 474 | 1763 |
| 23 | 23 | 1 ⊕ 3 | 509 | 1063 |
| 24 | 24 | 4 ⊕ 6 | 512 | 1706 |
| 25 | 25 | 5 ⊕ 7 | 513 | 1743 |
| 26 | 26 | 6 ⊕ 8 | 514 | 1761 |
| 27 | 27 | 7 ⊕ 9 | 515 | 1770 |
| 28 | 28 | 8 ⊕ 10 | 516 | 1774 |
| 29 | 29 | 1 ⊕ 6 | 859 | 1127 |
| 30 | 30 | 2 ⊕ 7 | 860 | 1453 |
| 31 | 31 | 3 ⊕ 8 | 861 | 1625 |
| 32 | 32 | 4 ⊕ 9 | 862 | 1712 |
| — | 33 | 5 ⊕ 10 | 863 | 1745 |
| — | 34 | 4 ⊕ 10 | 950 | 1713 |
| — | 35 | 1 ⊕ 7 | 947 | 1134 |
| — | 36 | 2 ⊕ 8 | 948 | 1456 |
| — | 37 | 4 ⊕ 10 | 950 | 1713 |

## Fig. 2

12

**Fig. 4**

**Fig. 5**

Fig. 6

## RÉFÉRENCES CITÉES DANS LA DESCRIPTION

**Documents brevets cités dans la description**

- FR 1351423

**Littérature non-brevet citée dans la description**

- **A. POLYDOROS et al.** A unified approach to serial search spread spectrum code acquisition. *IEEE Trans. on. Comm.,* 1984, vol. 32 (5

- **F. PRINCIPE et al.** Rapid acquisition of Gold codes and related sequences using iterative message passing on redundant graphical models. *Proc. MIL-COM'06,* 2006